# EUROPEAN PATENT APPLICATION

(11) **EP 2 157 721 A1**
(43) Date of publication of application: **24.02.2010**
(21) Application number: 07720995.5
(22) Date of filing: 27.04.2007
(51) Int. Cl.: H04J 13/00

(54) **DYNAMIC MULTI-PATH DETECTING METHOD AND DEVICE IN CDMA COMMUNICATION SYSTEM**

(30) Priority: 09.04.2007 CN 200710090837
(71) Applicant: Masshall Limited, Romasco Place Wickhams Cay 1 P.O. Box 3140 Road Town, Tortola (VG)
(72) Inventor: LI, Chao, Beijing 100085 (CN); LI, Jiyang, Beijing 100085 (CN); XU, Chaolun, Beijing 100085 (CN)
(74) Representative: HOFFMANN EITLE
(86) International application number: PCT/CN2007/001422
(87) International publication number: WO 2008/122153

(57) **Abstract**

This invention discloses a dynamic multi-path detection method in Code Division Multiple Access communication system, which includes: A Performing dynamic multi-path differential detection on multi-path location obtained from multi-path detection and judging whether multi-path location information on neighboring frame has changed, if so, then output all the multi-path locations after multi-path differential detection, then proceed to step B, otherwise, taking the multi-path location of the current frame after multi-path detection as final multi-path detection result, then proceeding step C; B Performing multi-path verification on each output multi-path location, then performing neighboring multi-path processing on each verified multi-path location, then using multi-path location after neighboring multi-path processing as final multi-path detection result; C Outputting final multi-path detection result. This invention also, in the mean time, discloses a multi-path searcher so that once this invention is adopted, in addition to guaranteeing the performance of multi-path search, the occurrence of false alarm under dynamic channel can be effectively reduced.

## Description

### Technical Field

This invention relates to multi-path detection technique, and more specifically, to a dynamic multi-path detection method and multi-path searcher used in Code Division Multiple Access (CDMA) communication system.

### Background

CDMA technology has advantages such as large capacity, multi-user, soft capacity and the inhibition of noise within the system band. As compared to traditional Frequency Division Multiple Access (FDMA) and Time Division Multiple Access (TDMA) technology, it has obvious advantage. Therefore, the third generation (3G) mobile communication system based on CDMA technology has become strongly promoted mainstream wireless mobile communication commercial system.

In wireless communication system adopting Code Division Multiple Access, wireless signal, when propagating in the air, will, in one aspect, be blocked by obstacle and ionized layer, etc., and will be affected by refraction, reflection and scattering too, in another aspect, the limited bandwidth signal will have drift and extension in frequency domain when it propagates in the air; therefore, the signal received by the receiver is no longer straight signal but multi-path signal coming from different direction and different path. The multi-path signal transmits the same original signal but with different delays, it is the superposition of mutually independent transmitted signal copies; generally, such same signal source signal from different path is called multi-path signal.

In direct sequence Code Division Multiple Access (DS-CDMA) system, since data symbol is extended by pseudo noise (PN) sequence, the duration of each chip is thus very short, hence, signal transmitted to the receiver through different path can be effectively separated on the chip. Therefore, if the signal in different path can be accurately followed in chip level and then signal in each path is treated and combined respectively by RAKE receiver having multiple receiving fingers, then the interference brought about by multi-path superposition can be converted into multi-path diversity gain with RAKE combination. The so-called operation by following each path of signal is called multi-path search. Therefore, it can be seen that if the interference from multi-path superposition is to be reduced, the main function of multi-path search is to detect, as accurate as possible and without any missing, the major multi-path component, with accuracy at least 1/2 chip.

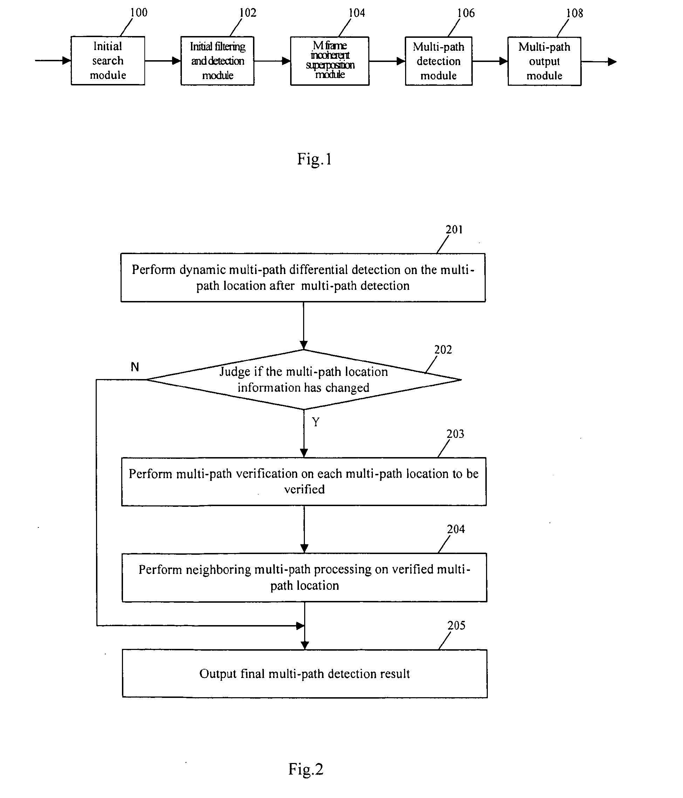

In the current technology, multi-path searcher for realizing multi-path search has adopted the structure of figure 1 with work principle as the followings: Firstly, an initial search module 100 will perform correlation value power calculation on each sampling point within a search range with respect to data in a frame unit transmitted from the receiving filter in the RAKE receiver; the calculated sampling point power value will be filtered out by an initial filtering detection module 102 for most of the sampling point noise power values on non-multi-path, then the filtered and detected sampling point power value will be transmitted to an M-FRAME INCOHERENT accumulation MODULE 104 to perform incoherent accumulation of sampling point power values in *M* continuous frames; The sampling point power after initial detection and filtering and *M*-frame incoherent accumulation is generally the power sampling point of multi-path and its neighborhood, which is already very stable. Then these values are transferred to a multi-path detection module 106 to get the multi-path location and its power after detection. Finally, result of the multi-path detection module 106 is outputted through a multi-path output module 108 to a multi-path manager of the RAKE receiver for subsequent processing.

Currently, there are so many technologies regarding multi-path search and they are so different. However, reviewed macroscopically, the performance of multi-path search in a CDMA mobile communication system is only decided by two major factors: the correlation length between PN code and data and the number of continuous multi-path search. In one aspect, the longer the correlation length, the larger the processing gain, the stronger the signal to noise ratio (SNR) of de-spread signal, and finally the higher probability of multi-path detection; in another aspect, in wireless mobile channels, the square error of the de-spread signal of a receiver will be directly proportional to correlation length, which means, along with the increase in correlation length, the increase in SNR of de-spread signal will be more and more limited. But for receivers of an actual CDMA system, multi-path search is the major part of system resource including operation amount and electric power consumption, hence, the correlation operation length of multi-path search is required to be as short as possible. Therefore, in actual application, correlation length is usually a relatively constant value, for example, in the range from 1024 chip to 2048 chip.

After the determination of the correlation length, the performance of a multi-path searcher is mainly decided by the number of continuous search. The theoretical analysis shows that when the correlation length is fixed, the false alarm probability and dismissal alarm probability of one pass multi-path search has an upper limit, that is, false alarm probability and dismissal alarm probability can not be sufficiently small at the same time, and the multi-path detection result obtained after accumulation of continuous multiple (*M* frames) correlation results can greatly reduce false alarm probability and dismissal alarm probability. Here, one pass multi-path search is usually for one frame, and the accumulation of the correlation result of *M* continuous frames is called incoherent accumulation. Since multi-path search requests that at least each frame should be given with an accurate result, the general practice is to store the correlation result of continuous *M* frames, and to perform incoherent accumulation on the result of the previous *M-1* frames and the result of the current frame. Then multi-path detection is performed on the accumulated correlation value. The advantage of doing so is: In the present time, only the correlation of one frame is performed, but the correlation result of continuous M frames is used by reading value in the memory. Though the entire consumption has hardly increased, the multi-path search performance can be greatly increased. Such method using multi-frame incoherent accumulation to enhance the performance of a multi-path searcher is widely adopted in prior art.

Although *M*-frame incoherent accumulation processing can effectively enhance multi-path search performance, yet it still has problems in specific situation. Due to the complexity in the real wireless channels, dynamic channels for example, birth-death channel and mobile channel, usually exists; under such conditions, the major multi-path will move or disappear at different times, and new multi-path will appear at new location. If a certain multi-path exists with stronger power inside of the previous *M*-1 frames, but moves or disappears in the current frame, then by use of *M*- frame incoherent accumulation processing method, in the current frame, the non-existent multi-path will be outputted as effective path; moreover, since continuous *M* frames are used for incoherent accumulation processing, such incorrect output may occur up to *M*-1 times. Once false alarm occurs, it will have very strong influence on the performance of the entire system: in one aspect, once incorrect multi-path is allocated to fingers of a RAKE receiver, the fingers will do much idle work, which futilely consumes many system resources; in another aspect, the occupation of corresponding fingers by incorrect multi-path will lead to the incapability of timely allocation of correct multi-path, which makes the signal SNR after combination drop drastically, resulting in system performance deterioration.

Therefore, how to fully guarantee the performance of multi-path search with a lower cost, and avoid as much as possible the occurrence of false alarm under dynamic channel at the same time is an important topic in multi-path search.

### Summary of the Invention

Therefore, the main objective of the current invention is to provide a dynamic multi-path detection method in a CDMA system, which, in addition to being able to guarantee multi-path search performance, can effectively reduce the occurrence of false alarm under dynamic channel.

Another objective of the current invention is to provide a multi-path searcher, which can effectively reduce false alarm probability under dynamic channel.

In order to achieve the above objectives, the technological proposal of the current invention is realized in the following way:
A dynamic multi-path detection method in Code Division Multiple Access communication system, comprising the following steps:
   A. For multi-path location obtained after multi-path detection, perform dynamic multi-path differential detection so as to judge whether there is any change in the multi-path location information in neighboring frames, if there is, then output all multi-path locations after multi-path differential detection, and proceed to step B, otherwise, the multi-path location of the current frame after multi-path detection is used as final multi-path detection result, and then proceed to step C;
   B. Perform multi-path verification on each output multi-path location, and perform neighboring multi-path processing on verified multi-path location, then use the multi-path location after neighboring multi-path processing as final multi-path detection result;
   C. Output the final multi-path detection result.

### Here, step A includes:

A1. store the multi-path locations of strongest L paths of the current frame and the previous frame, respectively; the multi-path locations of the current frame and the previous frame and the final output multi-path location are all stored in data arrays;
A2. compare whether both of them are the same, if so not, then all the detected multi-path locations will not be repeatedly stored, and a multi-path change flag is raised; if so, then the detected multi-path location of the current frame is stored, and the multi-path change flag is reset;
A3. output the final multi-path location stored and the value of multi-path change flag.

In step B of the above proposal, the multi-path verification process on one multi-path location includes:
B 11. receive multi-path location to be verified, calculate the multi-path power value of the multi-path location, and calculate the summed noise power value at the multi-path location and dis_win location; wherein, dis_win is a value of length that is longer than the multi-path delay window;
B12. calculate the difference between the multi-path power value and the noise power value and use it as the power value of de-noised multi-path;
B 13. judge whether de-noised multi-path power value is larger the product of power detection threshold and the noise power value, if so, then the current verified multi-path location is used as effective multi-path location, otherwise, the current processing flow is ended.

Wherein, the multi-path verification as mentioned in step B further includes: Perform on each multi-path to be verified step B11 to step B 13, and then output all the effective multi-path locations and the corresponding de-noised multi-path power values.

Wherein, the neighboring multi-path processing as mentioned in step B further includes:
B21. arrange the verified multi-path location pos[i] and its corresponding power pwr[i] in order of delay sequence, wherein i=1...2L, L is the number of fingers of a RAKE receiver;
B22. judge whether the difference between pos[i+1] and pos[i] is smaller than d_{N}, if so, then proceed to step B23; otherwise, proceed to step B29; wherein the value of d_{N} is N/2, and N represents the number of sampling delay point corresponding to a chip;
B23. judge whether the difference between pos[i+2] and pos[i+1] is smaller than d_{N}, if so, then proceed to step B24; otherwise, proceed to step B28;
B24. judge whether (pwr[i]+pwr[i+2])/2<T₀*pwr[i+1] is true, if so, then proceed to step B26; otherwise, proceed to step B25;
B25. judge whether (pwr[i]+pwr[i+2])/2>T₁*pwr[i+1], if so, then proceed to step B27; otherwise, proceed to step B26;
B26. set power values pwr[i], pwr[i+2] to 0 and then proceed to step B28;
B27. set pwr[i+1] to 0;
B28. judge whether pwr[i+1] > pwr[i], if so, then set pwr[i] to 0; otherwise, set pwr[i+1] to 0;
B29. when pwr[i]>0, output pwr[i] and its corresponding pos[i].

This invention also provides a multi-path searcher comprising an initial search module, an initial filtering detection module, an *M*-frame incoherent accumulation module, a multi-path detection module and a multi-path output module. The key point is that between the multi-path detection module and the multi-path output module, the multi-path searcher also includes a dynamic multi-path processing module, which is used to perform dynamic multi-path detection on multi-path location obtained from multi-path detection so as to determine if the channel has changed; meanwhile, when the channel has changed, to perform multi-path verification and neighboring multi-path processing on multi-path location obtained from dynamic multi-path detection.

Wherein the dynamic multi-path processing module further includes: a dynamic multi-path differential detection module, which is used to receive the multi-path location output from the multi-path detection module to perform channel differential detection, and output the processed multi-path location and control variable to a output selection module; the output selection module, which , based on the received multi-path location and control variable, determines whether the channel has changed and outputs the selection result to multi-path verification module or the multi-path output module; a multi-path verification module, which is used to verify the effectiveness of each multi-path location as sent by output selection module and send the detected multi-path location to a neighboring multi-path processing module; the neighboring multi-path processing module, which processes neighboring multi-path and then sends the processed effective multi-path location to the multi-path output module.

The dynamic multi-path differential detection module further includes: a storage unit, which is used to store the multi-path location of the strongest L paths of the current frame and the previous frame after multi-path detection, to store the final output result of the dynamic multi-path differential detection module, and to set multi-path change flag; a comparison unit, which is used to compare the stored multi-path locations of the strongest L paths of the current frame and previous frame so as to determine if there is any change in the multi-path; an output unit, which is used to output the stored final output result stored in the storage unit.

In the above proposal, the multi-path verification module further includes: a reception unit, which is used to receive the multi-path location pos[i] to be verified; a multi-path power calculation unit, which is used to calculate multi-path power value and its de-noised multi-path power value of pos[i]; a judgment and comparison unit, which is used to judge if multi-path location is effective, and whether all the multi-path locations to be verified have been verified; an information output unit, which is used to output all the effective multi-path locations and their corresponding de-noised multi-path power values.

The neighboring multi-path processing module further includes: a sequencing unit, which is used to sequence the obtained multi-path locations and their corresponding power after multi-path verification in order of delay sequence; a neighboring multi-path detection unit, which is used to find in neighboring multi-paths the peak value of the real path, and to set the power of non-real path to 0; a single multi-path determination unit, which is used to select and keep a multi-path within 1/2 chip in neighboring multi-path locations; a delay information processing unit, which is used to buffer and output all the power values larger than 0 among all the peak values after neighboring multi-path detection and their corresponding multi-path locations.

The dynamic multi-path detection method and device for a CDMA system provided by this invention is an optimized solution by targeting at the multi-path change issues that can not be solved by any prior art under dynamic channel conditions such as birth-death and mobile channels, which will be conducted only when the strongest L paths change has been detected. Therefore, when multi-path has not changed, the system consumption will not be increased, and when multi-path change occurs, very small operation amount is used to fully guarantee the correctness of multi-path. It not only avoids the unnecessary consumption of the system but also effectively prevents the performance loss of the system, which in turn effectively enhances the entire performance of the system.

This invention, under the condition of channel change, can realize correct detection on dynamic multi-path with very small amount of operation, and the neighboring multi-path processing measures in the invention can correct most of the errors occurring in prior art multi-path detection. This invention has advantages such as good practical utility, less complexity for realization as well as improvement to the system performance.

This invention also proposes method for performing verification on changed multi-path and method for processing neighboring multi-path to optimize and enhance multi-path detection.

### Brief Description of the Drawings

Figure 1 illustrates the constituent structure of multi-path searcher of the current technology;
Figure 2 illustrates the process to realize the dynamic multi-path detection of the current invention;
Figure 3 illustrates the principle to realize dynamic multi-path differential detection of the current invention;
Figure 4 illustrates the flow to realize variant multi-path verification of the current invention;
Figure 5 illustrates the flow to realize neighboring multi-path processing of the current invention;
Figure 6 illustrates the constituent structure of the receiver of the CDMA system;
Figure 7 illustrates the constituent structure of the multi-path searcher of the current invention.

### Preferred embodiments

The core concept of the current invention is: For the multi-path location information sent out after multi-path detection, a further comparison is made to verify whether the multi-path detection result in neighboring frame is identical to determine f the channel has changed; in case that the channel has changed, the output multi-path location after multi-path detection is performed with multi-path verification and neighboring multi-path processing, and then it is outputted as multi-path location output of multi-path detection for subsequent processing.

As shown in Fig. 2, the dynamic multi-path detection method of the current invention includes the following steps:
Step 201∼202: For multi-path location obtained after multi-path detection, dynamic multi-path differential detection is performed to compare multi-path location information of neighboring two frames and to judge whether multi-path location information has changed. if it has, then output all the multi-path locations after multi-path differential detections as multi-path locations to be verified, then proceed to step 203; if not, then take the multi-path location of the current frame after multi-path detection as the final multi-path detection result, then proceed to step 205.

Here, said performing dynamic multi-path differential detection is actually the step to compare and judge on every two neighboring frames in sequence, more specifically, the operations performed on every two neighboring frames include: to store respectively the multi-path detection results of the current frame and the previous frame, that is, the multi-path location of the strongest L paths of each frame; then, both of them is compared to each other to see if so the same, if not, it means that change has occurred, all the detected multi-path locations are stored without any repetition, and a multi-path change flag is raised; if they are, it means that no change has occurred, then the multi-path location of the current frame is stored, that is, the multi-path locations of the strongest L paths are used as multi-path detection result, and the multi-path change is reset; finally, the stored final multi-path location result and the multi-path change flag value are outputted. The value of L is a constant, which may be the multi-path fingers number of the RAKE receiver.

Step 203: Perform respective multi-path verification on each multi-path location outputted to be verified.

Step 204: Perform neighboring multi-path processing on verified multi-path locations, and then use the multi-path location subjected to neighboring multi-path processing as final multi-path detection result.

Step 205: Output the final multi-path detection result.

Before realizing the method of the current invention, it is generally necessary to proceed to first the following two steps so as to obtain multi-path location after multi-path detection:
Step a: Perform initial search and initial filtering detection on multi-path signal. More specifically, it is: to perform correlation value power calculation on each sampling point within a search window range with respect to data in a frame unit transmitted from the RAKE receiver; meanwhile, the sampling point noise power values on most of the non-multi-path locations of the calculated sampling point power values are filtered out.
Step b: To perform incoherent accumulation and multi-path detection on filtered and detected sampling point power. More specific operation is: perform incoherent accumulation of sampling point power values in *M* continuous frames, and then perform multi-path detection on sampling point power value after incoherent accumulation to obtain multi-path location and its power after multi-path detection.

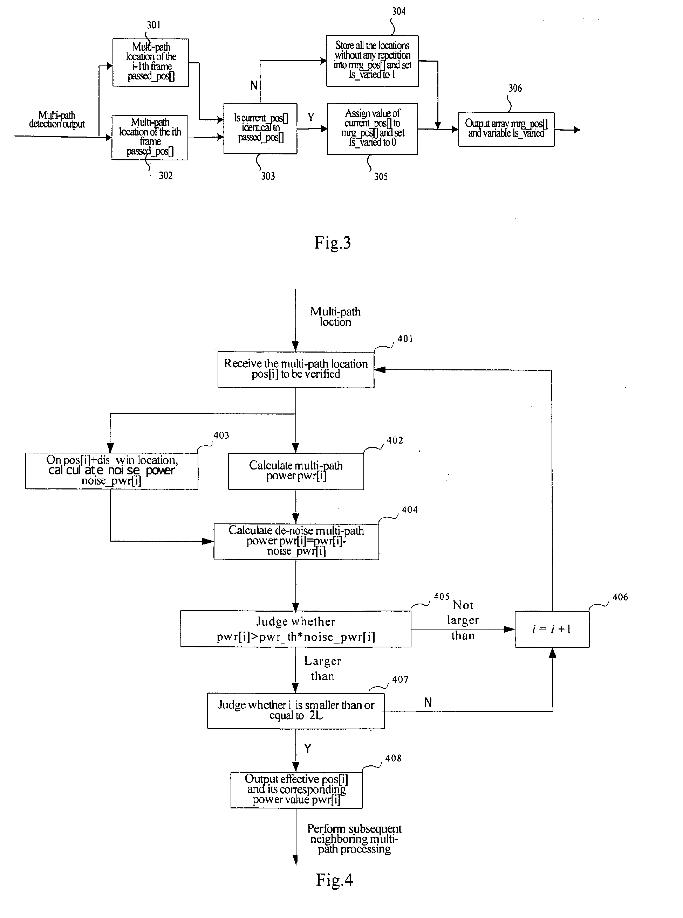

In the processing processes as shown in Fig. 2, arrays can be used in step 201 and step 202 to store and preserve multi-path locations, in the mean time, a variable can be set to be used as a multi-path change flag, and the set or reset of the flag can be realized by setting its value to 0 or 1. The realization step of specific dynamic multi-path differential detection is as shown in Fig. 3. In which, the array current_pos[] is used to store multi-path detection result of the current frame, and array passed_pos[] is used to store multi-path detection result of the previous frame, array mrg_pos[] is use to preserve the final multi-path location, and variable Is_varied is used as the multi-path change flag, it includes the following steps:
Step 301∼302: store respectively the multi-path locations of the strongest L paths output by the current frame after multi-path detection into array current_pos[] and store the multi-path locations of the strongest L path output by the previous frame after multi-path detection into array passed_pos[]. In the current invention, multi-path location is continuously outputted in a frame unit.
Step 303: compare to determine whether arrays current_pos[] and passed_pos[] are the same, if so, then proceed to step 305; otherwise, proceed to step 304.
Step 304: store all the multi-path locations appearing within current_pos[] and passed_pos[] into array mrg_pos[] without any repetition, then set Is_varied to 1 and proceed to step 306.
Step 305: assign the values within current_pos[] to array mrg_pos[], and set Is_varied to 0.
Step 306: Output the values of array mrg_pos[] and variable Is_varied, wherein, mrg_pos[] is used as multi-path location information to be verified or final multi-path detection result, and Is_varried is used as a control signal.

In the processing shown in Fig. 2, the multi-path verification method of step 203 is as shown in Fig. 4, more specifically, it involves the following steps:
Step 401: receive multi-path location pos[i] to be verified, wherein i is an index variable, i=1,......2L, L is the multi-path fingers number of the RAKE receiver. Here the multi-path location in pos[] is the final output multi-path location of step 306 in Fig. 3.
Step 402∼403: calculate multi-path power value pwr[i] at multi-path location pos[i] and calculate noise power value noise_pwr[i] at (pos[i]+dis_win).
   dis_win is generally a length value larger than multi-path delay window, for example, in 3GPP frequency division duplex (FDD) system, assume the maximum delay spreading is 20 µ s, then its corresponding delay is 80 chips. Under N times over-sampling, dis_win can be taken in a range larger than 80*N or smaller than -80*N, for example, ±100*N. In this step, the calculation of noise power value at (pos[i]+dis_win) is to dertermine a reference noise power to judge the effectiveness of multi-path location.
Step 404: calculate de-noised multi-path power value pwr[i]=pwr[i]-noise_pwr[i].
Step 405∼406: judge whether de-noised multi-path power value pwr[i] is larger than the product of pwr_th and noise_pwr[i], that is, to judge whether this multi-path location is effective. If so, then the currently verified multi-path location is taken as effective multi-path location, then proceed to step 407; otherwise, increase i by 1, and go back to step 401.

Here, pwr_th is a predetermined power detection threshold, pwr_th value is in the range of [4,100].

Step 407: judge whether the verification is complete or not, that is, to judge whether i ≤ 2L, if so, proceed to step 408; otherwise, increase i by 1, and go back to step 401.

Step 408: I output all the effective multi-path locations pos[i] and their corresponding de-noised multi-path power values pwr[i].

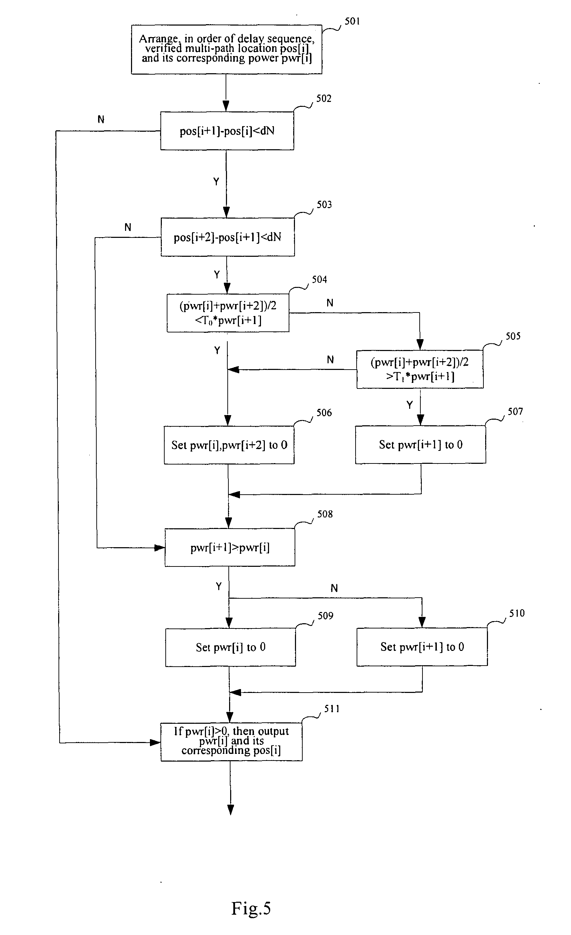

In the processing shown in Fig. 2, the neighboring multi-path processing method as described in step 204 is as shown in figure 5, the more specific steps are as the followings:
Step 501: Arrange the verified multi-path locations pos[i] and their corresponding powers pwr[i] in order of delay sequence.
Step 502: judge whether the difference between pos[i+1] and pos[i] is smaller than d_{N}, if so, proceed to step 503; otherwise, proceed to step 511.

Wherein, d_{N} has a value of N/2, N represents the number of sampling delay points corresponding to a chip. The judgment in step 502 is to select and keep a multi-path within 1/2chip.

Step 503: judge whether the difference between pos[i+2] and pos[i+1] is smaller than d_{N}, if so, then proceed to step 504; otherwise, proceed to step 508.

Step 504: judge whether (pwr[i]+pwr[i+2])/2<T₀*pwr[i+1], if so, then proceed to step 506; otherwise, proceed to step 505.

Step 505: judge whether (pwr[i]+pwr[i+2])/2>T₁*pwr[i+1], if so, then proceed to step 507; otherwise, proceed to step 506.

Step 506: Set the power values of pwr[i], pwr[i+2] to 0, and then proceed to step 508.

Step 507: Set pwr[i+1] to 0.

Step 508∼510: judge whether pwr[i+1] is larger than pwr[i], if so, then set pwr[i] to 0; otherwise, set pwr[i+1] to 0.

Step 511: If pwr[i]>0, then output pwr[i] and its corresponding pos[i].

The neighboring multi-path processing of the current invention utilizes the short-delay peak value detection method proposed in another co-filed patent application to remove the effect of neighboring multi-path superposition in order to get the real path peak value. To, T₁ are respectively the detection thresholds of two neighboring paths. Generally, T₀ is in the range of [0.40, 0.49], and T₁ is in the range of [0.49, 0.82].

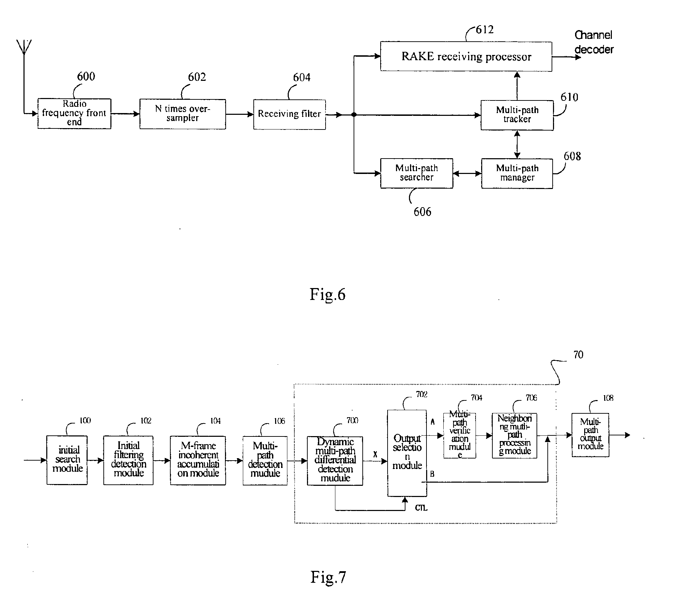

The CDMA receiver structure for realizing dynamic multi-path detection of the current invention is as shown in Fig. 6, which includes: a radio frequency front end 600, an N TIMES OVER-SAMPLER 602, a receiving filter 604, a multi-path searcher 606, a multi-path tracker 610, a multi-path manager 608 and a RAKE receiving PROCESSOR 612. Among them, the radio frequency front end 600 is used to achieve the processing of RF reception, i.e., to convert data in form of electromagnetic signals to baseband signals., the processed signal Processed signals go through the N-times oversampler 602 before being sent to the receiving filter 604.. The N-times oversampler 602 is used to N-times oversample the baseband signals, wherein N is no less than 2. The receiving filer 604 is used to perform matched filtering on signals oversampled by the N-times oversampler 602. If a root raised cosine (RRC) filter is employed at the transmitting side, then a RRC filter will also be used in receiving at the receiving side, and the filtered signals are equivalent to transmitted signals being filtered by a raised-cosine filter. The multi-path searcher 606 is used to coarsely search for delay locations of individual multi-path signals, and send the searched multi-path delay location to the multi-path manager, typically with a precision no less than 1/2 chip. The multi-path manager 608 is used to manage, coordinate and allocate the searched multi-path delay information, and to provide the multi-path delay location to the multi-path tracker 610. The multi-path tracker 610 is used to track the multi-path delay locations provided by the multi-path manager 608, perform refined synchronization, provide the tracked precise multi-path delay information of individual multi-paths to RAKE receiving processor 612 and feed them back to the multi-path manager 608, typically with a precision no less than 1/6 chip. The RAKE receiving processor 612 is used to demodulate and combine the data.

The signals oversampled by the N-times oversampler 602 are divided into 3 branches after being matched filtered by the receiving filter 604: one branch is processed by multi-path searcher 606 and multi-path manager 606 to obtain coarse multi-path location information; another branch is processed by the multi-path tracker 610 under the control of multi-path manager 606 to obtain the precise values of the delay information of individual paths, wherein the identical branch of baseband data are fed as input to both multi-path searcher 606 and the multi-path tracker 610; the last branch sends the data processed by receiving filer 604 to the RAKE receiving processor 612 where the demodulation of baseband data is achieved under the control of the delay information output by the multi-path tracker 610. Data demodulated by the RAKE receiving processor 612 are sent to the channel decoder for decoding to recover the transmitted data.

From the dynamic multi-path detection method described in Figs.2 to 5, it can be seen that the most important part for realizing dynamic multi-path detection in the current invention is multi-path search. To realize the multi-path search of the current invention, this invention provides a multi-path searcher, with constituent structure as shown in Fig. 7, including an initial search module 100, an initial filtering detection module 102, an *M-FRAME NON-incoherent accumulation module 104,* a multi-path detection module 106 and a multi-path output module 108. Between the multi-path detection module 106 and the multi-path output module 108, the multi-path searcher further includes a dynamic multi-path processing module 70, which is used to perform dynamic multi-path detection on multi-path locations obtained after multi-path detection so as to determine whether the channel has changed or not, and in case that the channel has changed, multi-path location obtained after dynamic multi-path detection is performed with multi-path verification and neighboring multi-path processing.

The dynamic multi-path processing module 70 further includes: a dynamic multi-path differential detection module 700, an output selection module 702, a multi-path verification module 704 and a neighboring multi-path processing module 706.

The dynamic multi-path differential detection module 700 receives multi-path locations outputted by multi-path detection module 106 after multi-path detection so as to perform channel differential detection and to output processed multi-path location to the X port of output selection module 702, and to output control variable to the CTL port of output selection module 702. The output selection module 702 determines whether the channel has changed or not according to the received multi-path location and control variable, and output the selection result through its own port A or port B . Generally, the true table of the input and output ports of output selection module 702 is shown in table 1:

**Table 1**

| Output | CTL | A | B |
|---|---|---|---|
| X | 0 | - | X |
| X | 1 | X | - |

In table 1, symbol "-" means there is no output.

If dynamic multi-path differential detection module 700 judges that there is no change in the channel, then, the value sent to the CTL port of output selection module 702 is 0, and the multi-path as detected by multi-path detection module 106 will be sent out from the B port of output selection module 702 directly to multi-path output module 108 for output. here the function of multi-path output module is completely identical to the multi-path output module in prior art. When dynamic multi-path differential detection module 700 judges that change has occurred in dynamic multi-path, then dynamic multi-path differential detection module 700 combines the multi-path locations of two continuous frames before and after the change and send it to the port X of output selection module 702. In the mean time, it will send out control signal 1 to the CTL port of output selection module 702. Therefore, multi-path location that is combined in dynamic multi-path differential detection module 700 is selected by output selection module 702 and then get transmitted to multi-path verification module 704 from port A. Then the multi-path verification module 704 will perform effectiveness verification on multi-path location as sent out from module 702, and the multi-path location that passes multi-path verification will be sent out to neighboring multi-path processing module 706. There might be several effective multi-path locations within one chip as sent out after the verification by multi-path verification module 704, hence, neighboring multi-path processing module 706 need to process the neighboring multi-path, and the effective multi-path location processed by neighboring multi-path processing module 706 will be sent out to multi-path manager 608 through multi-path output module 108.

In the above mentioned dynamic multi-path processing module 70, the dynamic multi-path differential detection module 700, as viewed from logical function it has realized, further includes: a storage unit, a comparison unit and an output unit, wherein the storage unit is used to store the multi-path locations of the strongest L paths of the current and previous frame after multi-path detection, to store the final output result of dynamic multi-path differential detection module 700 and to set the multi-path change flag. The comparison unit is used to compare the stored multi-path locations of the strongest L paths of the current frame and previous frame so as to determine whether multi-path has changed or not. The output unit is used to output the final output result stored in storage unit.

The above mentioned multi-path verification module 704, according to logical function it has realized, further comprises : a reception unit, a unit for the calculation of multi-path power, a judgment and comparison unit, and an information output unit, wherein, the reception unit is used for multi-path location pos[i] to be verified; the unit for the calculation of multi-path power is used to calculate multi-path power value of pos[i] and its de-noised multi-path power value; the judgment comparison unit is used to judge whether multi-path location is valid or not, and whether all the multi-path locations have been verified; and the information output unit is used to output all valid multi-path locations and their corresponding de-noised multi-path power values.

The neighboring multi-path processing module 706, according to logical function it has realized, further includes: a sequencing unit, a single multi-path confirmation unit, a neighboring multi-path detection unit, and a delay information processing unit. The sequencing unit is used to arrange, in order of delay sequence, multi-path location obtained after multi-path verification and its corresponding power. The neighboring multi-path detection unit, is used to detect the real path peak value in neighboring multi-paths and set the power of the non-real path to 0. The single multi-path confirmation unit is used to select and keep a multi-path within 1/2chip from neighboring multi-path locations, and the delay information processing unit is used to buffer and output all the power values larger than 0 after neighboring multi-path detection and their corresponding multi-path locations.

The above description is only preferred embodiments of the current invention and should not be used to limit the protection scope of the current invention.

## Claims

1. A dynamic multi-path detection method in Code Division Multiple Access communication system, including the following steps:
A. Performing dynamic multi-path differential detection on multi-path location obtained after multi-path detection so as to judge whether the multi-path location information of neighboring frames has changed, if it has, then outputting all multi-path locations after multi-path differential detection, and proceeding step B, otherwise, using the multi-path location of the current frame after multi-path detection as final multi-path detection result, and then proceeding step C;
B. Performing multi-path verification on each output multi-path location, and performing neighboring multi-path processing on verified multi-path location, and then using the multi-path location subjected to neighboring multi-path processing as final multi-path detection result;
C. Outputting the final multi-path detection result.

2. The dynamic multi-path detection method of claim 1, **characterized in that** step A more specifically includes:
A1. storing multi-path locations of the strongest L paths of the current frame and the previous frame, respectively;
A2. determining whether both of them are the same by comparison, if so not, then storing all the detected multi-path locations without any repetition, and setting a multi-path change flag; if so, then storing the detected multi-path location of the current frame, and resetting the multi-path change flag ;
A3. outputting the final multi-path location stored and the value of multi-path change flag.

3. The dynamic multi-path detection method of claim 2, **characterized in that** the multi-path locations of the current frame and the previous frame and the final output multi-path location are all stored in data arrays.

4. The dynamic multi-path detection method of any one of claim 1 to claim 3
**characterized in that** the process that the multi-path verification on a multi-path location in step B specifically comprising:
B11. receiving multi-path location to be verified, calculating the multi-path power value of the multi-path location, and calculating the summed noise power value at the multi-path location and dis_win location; wherein, dis_win the a value of length that is longer than the multi-path delay window;
B12. calculating the difference between the multi-path power value and the noise power value and using the difference as the power value of de-noised multi-path;
B13. Judging whether de-noised multi-path power value is larger than the product of power detection threshold and the noise power value, if it is, then the currently verified multi-path location is used as effective multi-path location, otherwise, the current processing flow is ended.

5. The dynamic multi-path detection method of claim 4, **characterized in that** the multi-path verification as described in step B further comprsing: proceeding step B11 to step B 13 on each multi-path to be verified, and then outputting all effective multi-path locations and their corresponding de-noised multi-path power values.

6. The dynamic multi-path detection method of claim 5 **characterized in that** the neighboring multi-path processing as described in step B further comprising:
B21. Arranging the verified multi-path location pos[i] and its corresponding power pwr[i] in order of delay sequence, wherein i=1...2L, L is the number of fingers of a RAKE receiver;
B22. Judging whether the difference between pos[i+1] and pos[i] is smaller than d_{N}, if so, then proceeding step B23; otherwise, proceeding step B29; wherein the value of d_{N} is N/2, and N represents the number of sampling delay point corresponding to a chip;
B23. Judging whether the difference between pos[i+2] and pos[i+1] is smaller than d_{N}, if so, then proceeding step B24; otherwise, proceeding step B28;
B24. Judging whether (pwr[i]+pwr[i+2])/2<T₀*pwr[i+1], if so, then proceeding step B26; otherwise, proceeding step B25;
B25. Judging whether (pwr[i]+pwr[i+2])/2>T₁*pwr[i+1], if so, then proceeding step B27; otherwise, proceeding step B26;
B26. Setting the power values pwr[i], pwr[i+2] to 0, and then proceeding step B28;
B27. Setting pwr[i+1] to 0;
B28. Judging whether pwr[i+1]> pwr[i], if so, then setting pwr[i] to 0; otherwise, seting pwr[i+1] to 0;
B29. When pwr[i]>0, outputting pwr[i] and its corresponding pos[i].

7. The dynamic multi-path detection method of any one of claim 1 to claim 3 wherein the neighboring multi-path processing as described in step B further comprising:
B21. Arranging the verified multi-path location pos[i] and its corresponding power pwr[i] in order of delay sequence, wherein i=1...2L, L is the number of fingers of a RAKE receiver;
B22. Judging whether the difference between pos[i+1] and pos[i] is smaller than d_{N}, if so, then proceeding step B23; otherwise, proceeding step B29; wherein the value of d_{N} is N/2, and N represents the number of sampling delay point corresponding to a chip;
B23. Judging whether the difference between pos[i+2] and pos[i+1] is smaller than d_{N}, if so, then proceeding step B24; otherwise, proceeding step B28;
B24. Judging whether (pwr[i]+pwr[i+2])/2<T₀*pwr[i+1], if so, then proceeding step B26; otherwise, proceeding step B25;
B25. Judging whether (pwr[i]+pwr[i+2])/2>T₁*pwr[i+1], if so, then proceeding step B27; otherwise, proceeding step B26;
B26. Setting the power values pwr[i], pwr[i+2] to 0, and then proceeding step B28;
B27. Setting pwr[i+1] to 0;
B28. Judging whether pwr[i+1]> pwr[i], if so, then setting pwr[i] to 0; otherwise, seting pwr[i+1] to 0;
B29. When pwr[i]>0, outputting pwr[i] and its corresponding pos[i].

8. A multi-path searcher, comprising: an initial search module, an initial filtering detection module, an *M*-frame incoherent accumulation module, a multi-path detection module and a multi-path output module, **characterized in that** between the multi-path detection module and the multi-path output module, the multi-path searcher further comprising a dynamic multi-path processing module, which is used to perform dynamic multi-path detection on multi-path location obtained from multi-path detection so as to determine if the channel has changed; meanwhile, when the channel has changed, to perform multi-path verification and neighboring multi-path processing on multi-path location obtained from dynamic multi-path detection..

9. The multi-path searcher of claim 8, **characterized in that** the dynamic multi-path processing module further comprising:
a dynamic multi-path differential detection module, which is used to receive the multi-path location output from the multi-path detection module to perform channel differential detection, and output the processed multi-path location and control variable to an output selection module;
the output selection module, which , based on the received multi-path location and control variable, determines whether the channel has changed and outputs the selection result to multi-path verification module or the multi-path output module;
a multi-path verification module, which is used to verify the effectiveness of each multi-path location as sent by output selection module and send the detected multi-path location to a neighboring multi-path processing module; and
the neighboring multi-path processing module, which processes neighboring multi-path and then sends the processed effective multi-path location to the multi-path output module.

10. The multi-path searcher of claim 9, **characterized in that** the dynamic multi-path differential detection module further comprising:
a storage unit, which is used to store the multi-path location of the strongest L paths of the current frame and the previous frame after multi-path detection, to store the final output result of the dynamic multi-path differential detection module, and to set multi-path change flag;
a comparison unit, which is used to compare the stored multi-path locations of the strongest L paths of the current frame and previous frame so as to determine if there is any change in the multi-path; and
an output unit, which is used to output the stored final output result stored in the storage unit.

11. The multi-path searcher of claim 9 or 10, **characterized in that** the multi-path verification module further comprising
a reception unit, which is used to receive the multi-path location pos[i] to be verified;
a multi-path power calculation unit, which is used to calculate multi-path power value and its de-noised multi-path power value of pos[i];
a judgment and comparison unit, which is used to judge if multi-path location is effective, and whether all the multi-path locations to be verified have been verified; and
an information output unit, which is used to output all the effective multi-path locations and their corresponding de-noised multi-path power values.

12. The multi-path searcher of claim 9 or 10 **characterized in that** the neighboring multi-path processing module further comprising:
a sequencing unit, which is used to sequence the obtained multi-path locations and their corresponding power after multi-path verification in order of delay sequence;
a neighboring multi-path detection unit, which is used to find in neighboring multi-paths the peak value of the real path, and to set the power of non-real path to 0;
a single multi-path determination unit, which is used to select and keep a multi-path within 1/2 chip in neighboring multi-path locations; and
a delay information processing unit, which is used to buffer and output all the power values larger than 0 among all the peak values after neighboring multi-path detection and their corresponding multi-path locations.

13. A Code Division Multiple Access receiver, comprising a radio frequency front end, an N TIMES oversampler and a RAKE receiving processor, the receiver further comprising:
a receiving filter, which is used to perform matched-filtering on signals oversampled by the N-times oversampler and send the matched-filtered signals to a multi-path searcher, a multi-path tracker and the RAKE receiving processor, respectively;
the multi-path manager, which is used to manage, coordinate and allocate the searched multi-path delay information, and to provide the multi-path delay locations to the multi-path tracker;
the multi-path tracker, which is used to track the multi-path delay locations provided by the multi-path manager and perform refined synchronization, provide the precise multi-path location information to the RAKE receiving processor and simultaneously feed them back to the multi-path manager;
the multi-path searcher, which is used to coarsely search for delay locations of individual multi-path signals, and send the searched multi-path delay locations to a multi-path manager;
**characterized in that**
the multi-path searcher comprising: an initial search module, an initial filtering detection module, an *M*-frame incoherent accumulation module, a multi-path detection module and a multi-path output module, **characterized in that** between the multi-path detection module and the multi-path output module, the multi-path searcher further comprising a dynamic multi-path processing module, which is used to perform dynamic multi-path detection on multi-path location obtained from multi-path detection so as to determine if the channel has changed, meanwhile, when the channel has changed, to perform multi-path verification and neighboring multi-path processing on multi-path location obtained from dynamic multi-path detection.

14. The Code Division Multiple Access receiver of claim 13, **characterized in that** the dynamic multi-path processing module further comprising:
a dynamic multi-path differential detection module, which is used to receive the multi-path location output from the multi-path detection module to perform channel differential detection, and output the processed multi-path location and control variable to an output selection module;
the output selection module, which , based on the received multi-path location and control variable, determines whether the channel has changed and outputs the selection result to multi-path verification module or the multi-path output module;
a multi-path verification module, which is used to verify the effectiveness of each multi-path location as sent by output selection module and send the detected multi-path location to a neighboring multi-path processing module; and
the neighboring multi-path processing module, which processes neighboring multi-path and then sends the processed effective multi-path location to the multi-path output module.

15. The Code Division Multiple Access receiver of claim 14, **characterized in that** the dynamic multi-path differential detection module further comprising:
a storage unit, which is used to store the multi-path location of the strongest L paths of the current frame and the previous frame after multi-path detection, to store the final output result of the dynamic multi-path differential detection module, and to set multi-path change flag;
a comparison unit, which is used to compare the stored multi-path locations of the strongest L paths of the current frame and previous frame so as to determine if there is any change in the multi-path; and
an output unit, which is used to output the stored final output result stored in the storage unit.

16. The Code Division Multiple Access receiver of claims 14 or 15, **characterized in that** the multi-path verification module further comprising:
a reception unit, which is used to receive the multi-path location pos[i] to be verified;
a multi-path power calculation unit, which is used to calculate multi-path power value and its de-noised multi-path power value of pos[i];
a judgment and comparison unit, which is used to judge if multi-path location is effective, and whether all the multi-path locations to be verified have been verified; and
an information output unit, which is used to output all the effective multi-path locations and their corresponding de-noised multi-path power values.

17. The Code Division Multiple Access receiver of claims 14 or 15, **characterized in that** the neighboring multi-path processing module further comprising:
a sequencing unit, which is used to sequence the obtained multi-path locations and their corresponding power after multi-path verification in order of delay sequence;
a neighboring multi-path detection unit, which is used to find in neighboring multi-paths the peak value of the real path, and to set the power of non-real path to 0;
a single multi-path determination unit, which is used to select and keep a multi-path within 1/2 chip in neighboring multi-path locations; and
a delay information processing unit, which is used to buffer and output all the power values larger than 0 among all the peak values after neighboring multi-path detection and their corresponding multi-path locations.
